(19) Europäisches Patentamt
European Patent Office
Office européen des brevets

(11) Veröffentlichungsnummer: **0 025 908**
**B1**

(12) # EUROPÄISCHE PATENTSCHRIFT

(45) Veröffentlichungstag der Patentschrift: **17.08.83**

(21) Anmeldenummer: **80105233.3**

(22) Anmeldetag: **03.09.80**

(51) Int. Cl.³: **C 09 B 26/02,** C 09 B 57/04, C 07 D 209/44, C 07 D 401/04, C 07 D 405/04, C 07 D 403/04, C 07 D 413/04

(54) **1:1-Nickelkomplexe und deren Verwendung.**

(30) Priorität: **12.09.79 DE 2936748**

(43) Veröffentlichungstag der Anmeldung: **01.04.81 Patentblatt 81/13**

(45) Bekanntmachung des Hinweises auf die Patenterteilung: **17.08.83 Patentblatt 83/33**

(84) Benannte Vertragsstaaten: **CH DE FR GB IT LI**

(56) Entgegenhaltungen:
**CH-A-599 309**
**DE-A-2 142 245**
**DE-A-2 504 321**
**FR-A-2 243 235**
**FR-A-2 283 891**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Radtke, Volker, Dr., Barbarossastrasse 4, D-6733 Hassloch (DE)**

**EP 0 025 908 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# 1 : 1-Nickelkomplexe und deren Verwendung

Die Erfindung betrifft 1 : 1-Nickelkomplexe der Formel

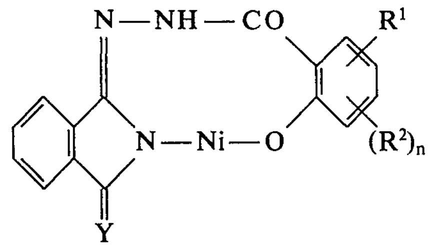

(I)

in der

$R^1$ für Wasserstoff oder $C_1$- bis $C_4$-Alkyl,
$R^2$ für Chlor oder Brom,
n für 0, 1 oder 2,
Y für einen Rest der Formeln

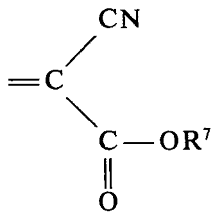

oder

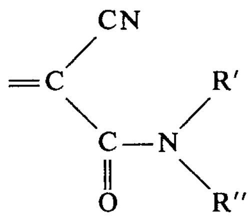

$R^7$ für $C_1$- bis $C_4$-Alkyl,
R' für Wasserstoff, $C_1$- bis $C_4$-Alkyl, gegebenenfalls durch 1 oder 2 Chlor oder Brom und/oder Methyl substituiertes Phenyl,
R'' für Wasserstoff oder

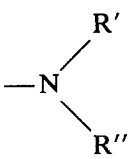

für Piperidyl, Pyrrolidinyl oder Morpholinyl stehen.

Die neuen Nickelkomplexe der Formel I sind wertvolle Pigmente, die in feinverteilter Form zum Pigmentieren von Lacken, Druckfarben und Kunststoffen eingesetzt werden können. Die erhaltenen Färbungen zeichnen sich durch gute allgemeine Pigmenteigenschaften, insbesondere durch gute Licht- und Weichmacherechtheiten aus.

Aus der DE-A-2 504 321 sind Metallkomplexe von Azomethinen der Formel

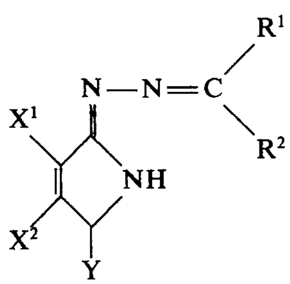

bekannt, in der $R^1$ Wasserstoff, Alkyl oder Aryl, $R^2$ einen isocyclischen oder heterocyclischen Rest mit einer zur Azomethingruppe benachbarten Hydroxylgruppe oder

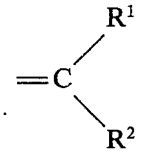

einen gegebenenfalls mit Benzolkernen anellierten 5- oder 6gliedrigen heterocyclischen Ring, $X^1$ und $X^2$ Alkyl, Cycloalkyl, Aralkyl oder Aryl oder

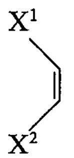

einen ankondensierten carbocyclischen oder heterocyclischen Ring und Y den Rest einer methylenaktiven Verbindung oder eines Hydrazids bedeuten. Nach den Angaben auf Seite 15 der DE-A-2 504 321 sind Farbstoffe mit Methinresten, die sich vom 2,4-Dihydroxychinolin und 2,4-Dihydroxycumarin ableiten, besonders bevorzugt.

Für $R^1$ sind als Substituenten neben Wasserstoff als $C_1$- bis $C_4$-Alkyl im einzelnen z. B. zu nennen: Methyl, Äthyl, Propyl, Isopropyl, Butyl, sec.-Butyl und Isobutyl.

Für Y kommen Reste von methylenaktiven Verbindungen der Formeln

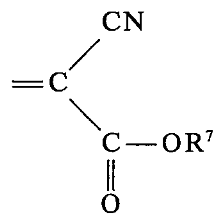

und

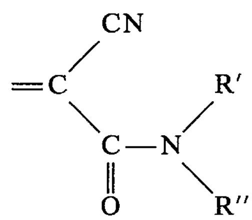

in Betracht, worin

$R^7$ für $C_1$- bis $C_4$-Alkyl,
$R'$ für Wasserstoff, $C_1$- bis $C_4$-Alkyl, gegebenenfalls durch 1 oder 2 Chlor oder Brom und/oder Methyl substituiertes Phenyl,
$R''$ für Wasserstoff oder

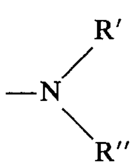 für Piperidinyl, Pyrrolidinyl oder Morpholinyl stehen.

Die Nickelkomplexe der Formel I erhält man durch Umsetzen der Verbindungen der Formel II

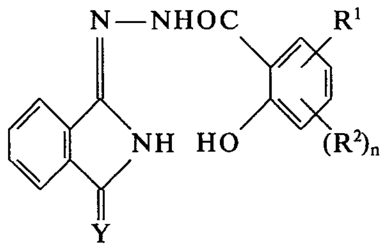

(II)

in der $R^1$, $R^2$, Y und n die oben angegebene Bedeutung haben, mit Nickelsalzen.

Vorzugsweise führt man die Umsetzung in Lösungsmitteln wie Wasser, Eisessig, Dimethylformamid, Dimethylsulfoxid, Äthylenglykolmonomethyl- oder -äthyläther, Äthanol oder Gemischen davon durch. Es ist nicht nötig, die Hyrazone der Formel II vorher zu isolieren; vielmehr kann die Metallisierung direkt im Anschluß an die Herstellung der Hydrazone der Formel II erfolgen. Als Nickelsalz verwendet man vorzugsweise das Formiat, Acetat oder Stearat. Man kann aber auch mit Salzen stärkerer Säuren wie dem Sulfat in Gegenwart einer Hilfsbase wie Natriumacetat arbeiten.

Die Verbindungen der Formel II können auf zwei Wegen hergestellt werden,

a) durch Umsetzung einer Verbindung der Formel III

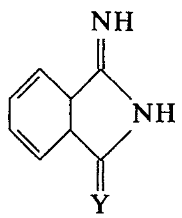

(III)

mit einem o-Hydroxycarbonsäurehydrazid der Formel IV

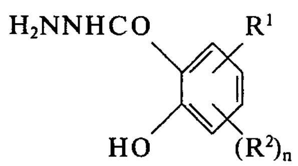

(IV)

oder

b) durch Kondensation einer Verbindung der Formel V

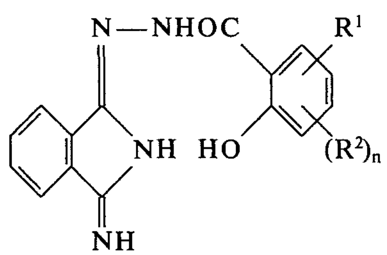

(V)

mit einer Verbindung $H_2Y$, wobei $R^1$, $R^2$ und n die oben angegebene Bedeutung haben.

Der Weg b) empfiehlt sich dann, wenn es schwierig ist, Verbindungen der Formel (III) in reiner Form herzustellen und zu isolieren.

Die Verbindungen der Formel III ihrerseits erhält man durch Kondensation von Diiminoisoindolin VI

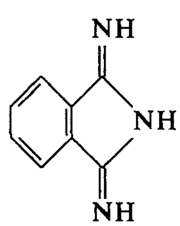

(VI)

mit der methylenaktiven Verbindung $H_2Y$.

Als methylenaktive Verbindungen $H_2Y$ kommen z. B. in Betracht: Cyanessigsäuremethyl-, -äthyl-, -propyl- oder -butylester, Cyanacetamid, Cyanessigsäuremethyl- und -äthylamid und Cyanessigsäuremorpholid.

Die Kondensation der Verbindungen der Formel VI mit den methylenaktiven Verbindungen erfolgt zweckmäßigerweise bei Temperaturen zwischen 10 und 125°C in einem organischen Lösungsmittel wie Methanol, Äthanol, Äthylenglykolmonomethyläther, Essigsäure, gegebenenfalls in Mischungen mit Wasser. Auch Dimethylformamid, N-Methylpyrrolidon, Dimethylacetamid, Xylol, o-Dichlorbenzol und Nitrobenzol sind als Lösungsmittel geeignet.

Als o-Hydroxycarbonsäurehydrazide der Formel IV kommen zum Beispiel in Betracht: Salicylsäurehydrazid, 5-Chlorsalicylsäurehydrazid, 3,5-Dichlorsalicylsäurehydrazid, 3,5-Dibromsalicylsäurehydrazid, o-Kresotinsäurehydrazid und p-Kresotinsäurehydrazid.

Die Kondensation der Verbindungen der Formel III mit den o-Hydroxycarbonsäurehydraziden der Formel IV wird zweckmäßigerweise in polaren organischen Lösungsmitteln, vor allem in solchen, die mit Wasser mischbar sind, durchgeführt. Geeignet sind zum Beispiel Dimethylformamid, Dimethylacetamid, N-Methylpyrrolidon, Eisessig, Ameisensäure, Äthylenglykolmonoäthyläther, Äthanol oder Gemische davon.

Verbindungen der Formel V werden hergestellt durch Umsetzen von 1,3-Diiminoisoindolin (Formel VI) mit o-Hydroxycarbonsäurehydraziden der Formel IV.

Die Reaktionsbedingungen sind die gleichen wie bei der Kondensation des 1,3-Diiminoisoindolins mit methylenaktiven Verbindungen.

Die anschließende Kondensation der Verbindungen der Formel V mit Verbindungen der Formel $H_2Y$, wobei Y die oben angegebene Bedeutung hat, erfolgt wiederum zweckmäßigerweise in polaren organischen Lösungsmitteln, insbesondere solchen, die mit Wasser mischbar sind. Geeignet sind zum Beispiel Dimethylformamid, Dimethylacetamid, N-Methylpyrrolidon, Eisessig, Ameisensäure, Äthylenglykolmonoäthyläther, Äthanol oder Gemische davon.

In den nachfolgenden Beispielen bedeuten die Teile, sofern nicht anders vermerkt, Gewichtsteile, die Prozente Gewichtsprozente, und die Temperaturen sind in Celsiusgraden angegeben.

## Beispiel 1

23 Teile 1-Imino-3-(cyano-methoxycarbonyl-methylen)-isoindolin, hergestellt aus 1,3-Diiminoisoindolin und Cyanessigsäuremethylester in Methanol, und 18,6 Teile 5-Chlorsalicylsäurehydrazid werden in 500 Teilen Eisessig 1 Stunde unter Rückfluß erhitzt. Nach dem Erkalten saugt man ab, wäscht mit wenig Eisessig und Methanol nach und erhält nach dem Trocknen 32 Teile eines orange gefärbten Farbstoffs der Formel

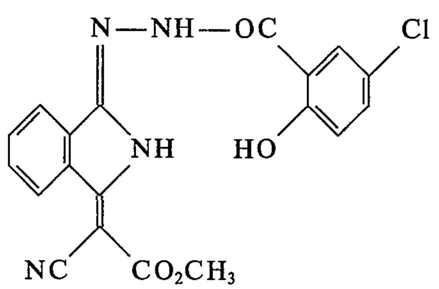

## Beispiel 2

16 Teile des nach Beispiel 1 hergestellten Hydrazons werden in 300 Teilen Dimethylformamid mit 10,2 Teilen Nickelacetat 3 Stunden bei 100°C gerührt. Man saugt den hellroten Niederschlag bei 60–70°C ab, wäscht mit wenig Dimethylformamid und Methanol nach und erhält 11 Teile eines roten Farbstoffs der Formel

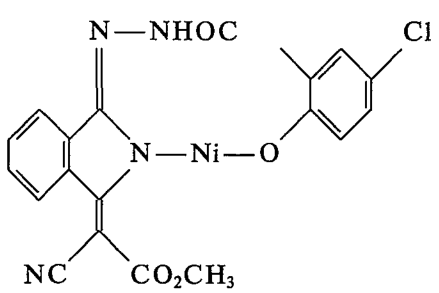

## Beispiele 3 bis 10

Nach den Angaben des Beispiels 1 werden die in der folgenden Tabelle aufgeführten Hydrazone dargestellt.

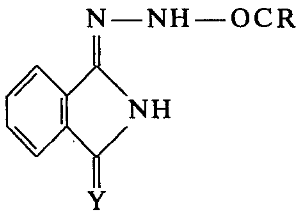

| Bsp. | Y | R | Farbton |
|---|---|---|---|
| 3 | 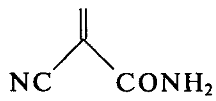 | 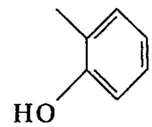 | gelb |
| 4 | 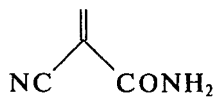 | 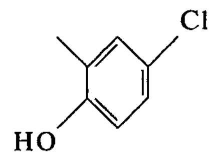 | gelb |
| 5 | 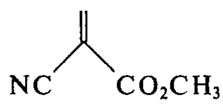 | 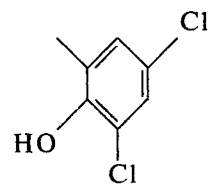 | orange |
| 6 | 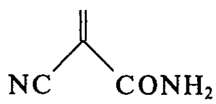 | 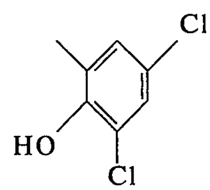 | orange |
| 7 | 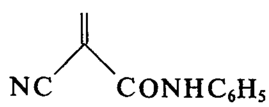 | 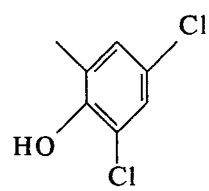 | gelbstichig-rot |
| 8 | 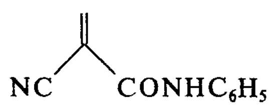 | 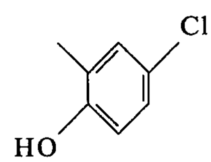 | gelb |
| 9 | 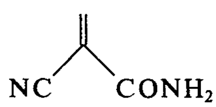 | 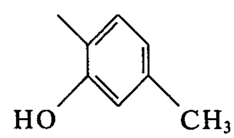 | gelb |
| 10 | 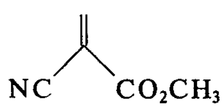 | 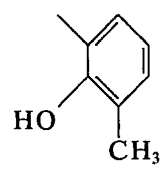 | gelb |

Beispiele 11 bis 33

Nach den Angaben des Beispiels 2 werden durch Umsetzung der entsprechenden Hydrazone mit Nickelsalzen die in der folgenden Tabelle aufgeführten Nickelkomplexe hergestellt.

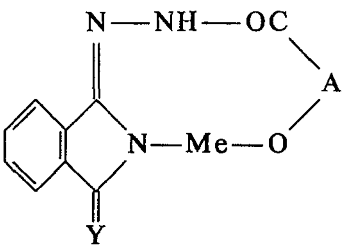

| Bsp. | Y | A | Me | Farbton |
|---|---|---|---|---|
| 11 | 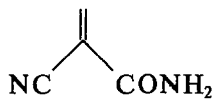 | 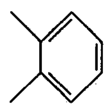 | Ni | rot |
| 12 | 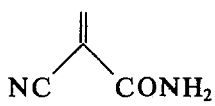 | 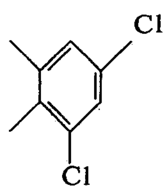 | Ni | violett |
| 13 | 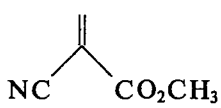 | 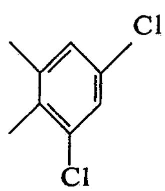 | Ni | blaustichig-rot |
| 14 | 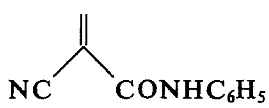 | 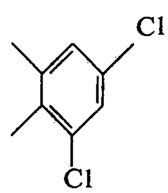 | Ni | blaustichig-rot |
| 15 | 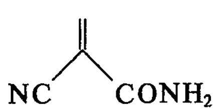 | 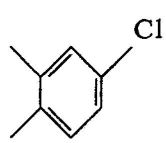 | Ni | rot |
| 16 | 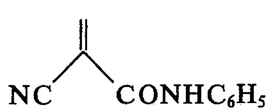 | 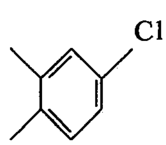 | Ni | rot |
| 17 | 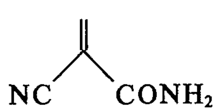 | 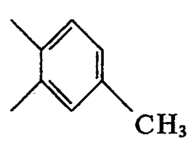 | Ni | rotbraun |

Fortsetzung

| Bsp. | Y | A | Me | Farbton |
|---|---|---|---|---|
| 18 | 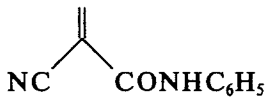 | 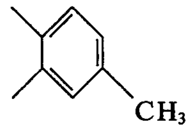 | Ni | blaustichig-rot |
| 19 | 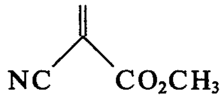 | 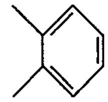 | Ni | blaustichig-rot |
| 20 | 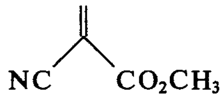 | 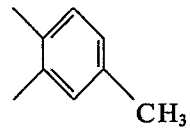 | Ni | rot |
| 21 | 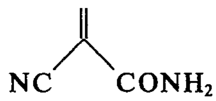 | 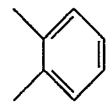 | Ni | rot |
| 22 | 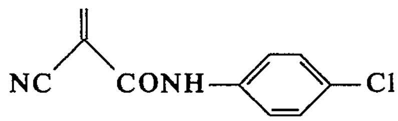 | 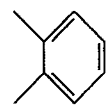 | Ni | violett |
| 23 | 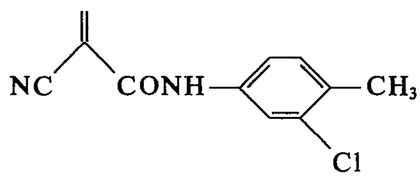 | 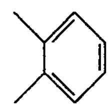 | Ni | violett |
| 24 | 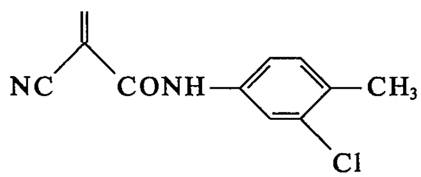 | 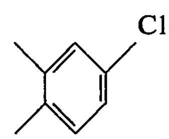 | Ni | blaustichig-rot |
| 25 | 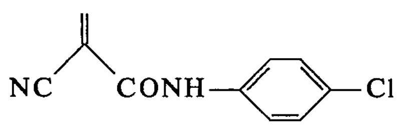 | 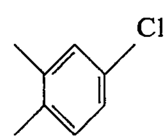 | Ni | blaustichig-rot |
| 26 | 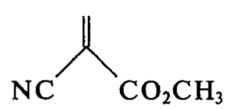 | 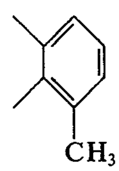 | Ni | braun |
| 27 | 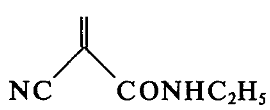 | 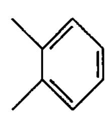 | Ni | blaustichig-rot |

Fortsetzung

| Bsp. | Y | A | Me | Farbton |
|---|---|---|---|---|
| 28 | 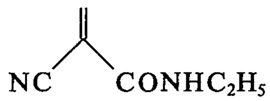 | 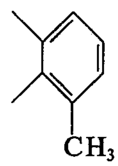 | Ni | blaustichig-rot |
| 29 | 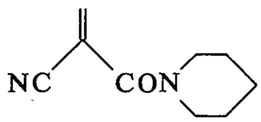 | 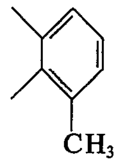 | Ni | blaustichig-rot |
| 30 | 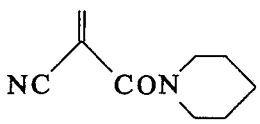 | 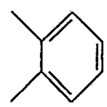 | Ni | gelbstichig-rot |
| 31 | 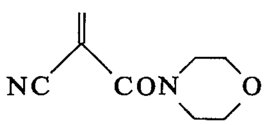 | 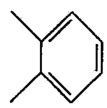 | Ni | gelbstichig-rot |
| 32 | 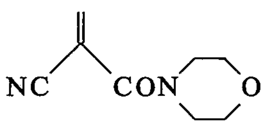 | 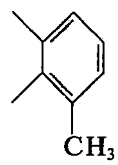 | Ni | blaustichig-rot |
| 33 | 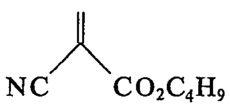 | 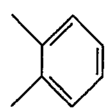 | Ni | rot |

### Beispiel 34

### 10%ige Volltoneinbrennlackierung auf Papier

a) Volltonpaste (30%ig)

3 Teile Farbstoff des Beispiels 1 werden mit 7 Teilen eines firnisähnlichen Bindemittels (= Grinding Base 100 S der Firma Lawter Chemicals Inc., Chicago) auf einem Dreiwalzenstuhl mit 6 Passagen bei 80 atü zu einer 30%igen Volltonpaste verarbeitet.

b) Die für die Färbung benutzte Volltonlackpaste (10%ig)

2 Teile Volltonpaste a) werden mit 4 Teilen eines Bindemittelgemisches, bestehend aus 1 Teil eines mit Sojaöl modifizierten Alkydharzes, 2 Teilen eines mit synthetischer Fettsäure modifizierten Alkydharzes und 3 Teilen eines lösungsmittelfreien Melaminharzes vermischt.

c) Durchführung der Färbung

Mit einem Filmziehgerät wird die Lackpaste b) auf Karton in einer Schichtdicke von 100 µ aufgetragen und 45 Minuten bei 120° C im Trockenschrank eingebrannt.

Man erhält eine rote Färbung mit ausgezeichneter Licht- und Wetterechtheit.

Beispiel 35

Einbrennlackierung im Verschnitt 1 : 20

a) Weißpaste (30%ig)

42 Teile eines Bindemittels, erhalten durch Vermischen von 1 Teil eines mit Sojaöl modifizierten Alkydharzes und 2 Teilen eines mit synthetischer Fettsäure modifizierten Alkydharzes werden mit 30 Teilen Titandioxid (Rutilware), 22 Teilen eines lösungsmittelfreien Melaminharzes und 6 Teilen eines kolloidalen Siliziumdioxid auf dem Dreiwalzenstuhl bei 80 atü mit 6 Passagen zu einer 30%igen Weißpaste angerieben.

b) Für die Färbung benutzte Lackpaste

0,5 Teile Volltonpaste (30%ig) (Beispiel 34a) und 10 Teile Weißpaste (30%ig) dieses Beispiels Nr. a) werden auf einem Telleranreibegerät gemischt und verrieben.

c) Durchführung der Färbung

Mit einem Filmziehgerät wird die Lackpaste b) auf Karton mit einer Schichtdicke von 100 µ aufgetragen und 45 Minuten bei 120° C im Trockenschrank eingebrannt.
Es werden blaustichige Rotfärbungen mit ausgezeichneter Licht- und Wetterechtheit erhalten.

Beispiel 36

Weich-PVC, 0,1%ige Färbung (transparent)

0,05 Teile Farbstoff, erhalten nach Beispiel 11, werden mit 50 Teilen einer Mischung aus 65 Teilen Polyvinylchloridpulver, 35 Teilen Diäthylhexylphthalat und 2 Teilen Dibutyl-Zinn-bis-thioglykolsäurehexylester auf einem Mischwalzwerk bei 150 bis 160° C homogenisiert (ca. 8 Minuten), zu Fellen gewalzt und auf einem Kalanderwalzwerk geglättet. Man erhält leuchtend rot gefärbte Felle mit ausgezeichneter Lichtechtheit.

Beispiel 37

Weich-PVC, 1 : 10 (Verschnitt)

0,25 Teile Farbstoff, erhalten nach Beispiel 11, werden mit 2,5 Teilen Titandioxid (Rutilware) und 50 Teilen einer Mischung aus 65 Teilen Polyvinylchloridpulver, 36 Teilen Diäthylhexylphthalat und 2 Teilen Dibutyl-Zinn-bis-thioglykolsäurehexylester auf einem Mischwalzwerk bei 150 bis 160° C homogenisiert (ca. 8 Minuten), zu Fellen gewalzt und auf einem Kalanderwalzwerk geglättet. Man erhält rot gefärbte Felle mit ausgezeichneter Lichtechtheit.

**Patentansprüche**

1. 1 : 1-Nickelkomplexe der Formel

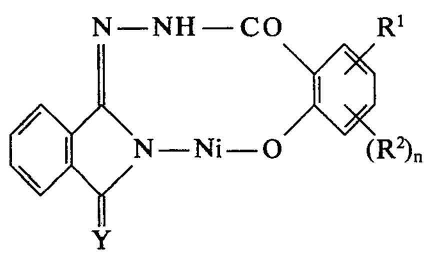

(I)

in der

$R^1$ für Wasserstoff oder $C_1$- bis $C_4$-Alkyl,

$R^2$ für Chlor oder Brom,
n für 0, 1 oder 2,
Y für einen Rest der Formeln

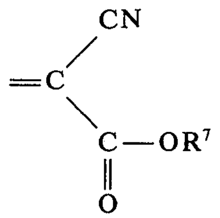

oder

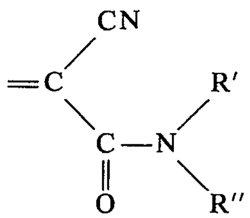

$R^7$ für $C_1$- bis $C_4$-Alkyl,
R' für Wasserstoff, $C_1$- bis $C_4$-Alkyl, gegebenenfalls durch 1 oder 2 Chlor oder Brom und/oder Methyl substituiertes Phenyl,
R'' für Wasserstoff oder

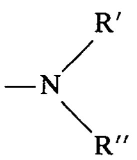 für Piperidyl, Pyrrolidinyl oder Morpholinyl stehen.

2. Verwendung der 1 : 1-Nickelkomplexe gemäß Anspruch 1 als Pigment zum Färben von Lacken, Druckfarben oder Kunststoffen.

**Claims**

1. A 1 : 1 nickel complex of the formula

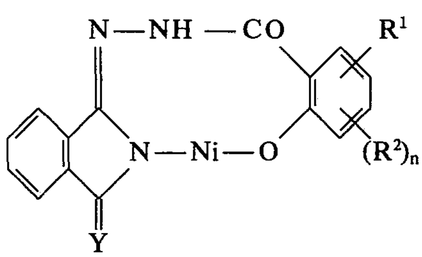

(I)

where

$R^1$ is hydrogen or $C_1$- to $C_4$-alkyl,
$R^2$ is chlorine or bromine,
n is 0, 1 or 2,
Y is a radical of the formula

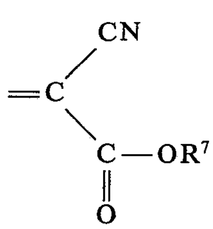

or

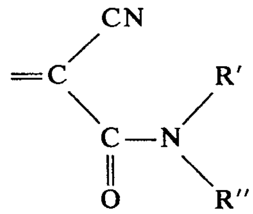

$R^7$ is $C_1$- to $C_4$-alkyl,
R′ is hydrogen, $C_1$- to $C_4$-alkyl, phenyl, or phenyl substituted by 1 or 2 chlorine or bromine atoms and/or methyl groups,
R″ is hydrogen, or

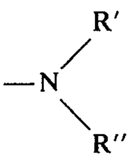 is piperidyl, pyrrolidinyl or morpholinyl.

2. Use of a 1 : 1 nickel complex as claimed in claim 1 as a pigment for colouring paints, printing inks or plastics.

**Revendications**

1. Complexes de nickel 1 : 1 de formule

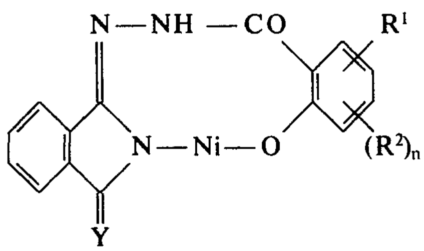

(I)

dans laquelle

$R^1$ représente l'hydrogène ou un groupe alkyle en C 1–C 4,
$R^2$ représente le chlore ou le brome,
n est égal à 0, 1 ou 2,
Y représente un reste de formule

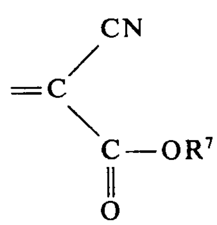

ou

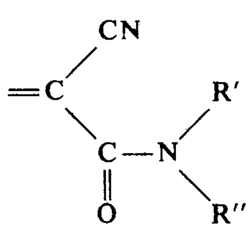

$R^7$ représente un groupe alkyle en C 1–C 4,

R' représente l'hydrogène, un groupe alkyle en C 1 – C 4, un groupe phényle éventuellement substitué par 1 ou 2 atomes de chlore ou de brome et/ou groupes méthyle,

R'' représente l'hydrogène ou bien

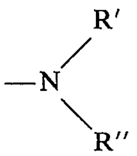 représente un reste pipéridyle, pyrrolidinyle ou morpholinyle.

2. Utilisation des complexes de nickel 1 : 1 selon la revendication 1 en tant que pigments pour la coloration de peintures, de couleurs d'impression ou de résine synthétiques.